# FASCICULE DE BREVET EUROPEEN

(11) **EP 1 860 671 B1**
(45) Date de publication et mention de la délivrance du brevet: **04.01.2017**
(21) Numéro de dépôt: 07290573.0
(22) Date de dépôt: 07.05.2007
(51) Int. Cl.: H01F 27/04, H01R 4/70, H02G 15/113

(54) **Passe-barre**
Durchführung
Bushing

(30) Priorité: 23.05.2006 FR 0604632
(43) Date de publication de la demande: 28.11.2007
(73) Titulaire: PIOCH S.A., 06510 Carros (FR)
(72) Inventeur: Pioch, Olivier, 06200 Nice (FR)
(74) Mandataire: Lavoix

(56) Documents cités:
- EP-A1- 0 944 101
- WO-A-98/26473
- DE-A1- 19 805 059
- FR-A1- 2 767 959
- GB-A- 2 316 810
- US-A- 2 431 189
- US-A- 3 283 062
- US-A- 3 428 936
- US-A- 3 966 294

## Description

La présente invention concerne un passe-barre, du type comportant :
- une barre conductrice équipée, à chaque extrémité, d'un profil de connexion ;
- une garniture de maintien de la barre conductrice au travers d'une paroi, la garniture comportant des moyens de liaison à la paroi ; et
- une enveloppe de protection d'une extrémité exposée de la barre conductrice faisant saillie d'un côté de la garniture.

Dans de nombreuses applications électriques de puissance telles que les transformateurs, il est nécessaire de transmettre de l'énergie électrique au travers d'une paroi délimitant une enceinte dans laquelle se trouve un équipement électrique.

Les câbles de transport du courant électrique ne peuvent traverser directement les parois au travers d'ouvertures, compte tenu des risques de sectionnement des câbles qui en résultent et de l'absence d'étanchéité au niveau du passage de câbles au travers de la paroi.

Ainsi, il est connu d'utiliser des dispositifs dits "passe-barre", qui permettent de maintenir rigidement une barre conductrice de l'électricité au travers d'une paroi à partir d'une garniture isolante assurant la retenue de la barre et l'étanchéité à l'eau. La barre conductrice fait saillie de part et d'autre de la paroi. Elle présente à chaque extrémité des moyens de connexion à des câbles électriques circulant de part et d'autre de la paroi.

Afin d'assurer la protection de la connexion entre le câble extérieur et l'extrémité de la barre faisant saillie au-delà de la surface extérieure de l'enceinte de confinement de l'équipement électrique, il est connu de prévoir une gaine qui recouvre l'extrémité de la barre à laquelle le câble est connecté.

Cette gaine est formée par exemple d'un manchon de polymère.

Lors du montage, la gaine est initialement engagée sur le câble avant connexion, puis elle est amenée par coulissement sur la barre après connexion du câble.

L'étanchéité procurée par un tel manchon est peu efficace et de plus il convient, pour l'opérateur en charge du montage du passe-barre, de penser à disposer le manchon sur le câble avant la connexion de celui-ci, sans quoi le manchon ne peut plus être mis en place sans qu'il soit nécessaire de déconnecter le câble de l'extrémité de la barre conductrice.

DE 198 05 059 A1 divulgue un passe-barre selon le préambule de la revendication 1.

L'invention a pour but de proposer une solution à ce problème de difficulté d'assemblage du passe-barre ainsi équipé d'une enveloppe de protection de la connexion entre la barre et un câble conducteur.

A cet effet, l'invention a pour objet un passe-barre selon la revendication 1.

Suivant des modes particuliers de réalisation, le passe-barre comporte l'une ou plusieurs des caractéristiques suivantes :
- le passe-barre comporte des moyens de liaison mécanique du boîtier à la paroi;
- les moyens de liaison mécanique du boîtier à la paroi comportent des pattes latérales de liaison faisant saillie à l'extérieur du boîtier et propres à recevoir des vis de liaison à la paroi ;
- les deux demi-coques délimitent ensemble un corps du boîtier, généralement tubulaire, et le boîtier comporte un fond délimitant au moins un orifice de passage d'un câble électrique, lequel fond est rapporté sur au moins une demi-coque pour obturer à une extrémité le corps du boîtier ;
- ledit boîtier délimite au moins une sortie de passage d'un câble électrique disposée transversalement par rapport à la direction exposée de la barre conductrice ;
- les deux demi-coques du boîtier sont identiques ;
- le boîtier comporte une structure en polymère rigide et un revêtement externe en élastomère ;
- il comporte un transformateur d'intensité disposé dans le boîtier et relié à la barre conductrice, lequel transformateur d'intensité présente une sortie hors du boîtier propre à fournir une valeur caractéristique de l'intensité circulant dans la barre conductrice ; et
- chaque demi-coque comprend une partie de liaison et une partie d'extrémité indépendantes l'une de l'autre, et des moyens pour assembler lesdites parties l'une à l'autre, les parties de liaison des demi-coques étant aptes à enchâsser entre elles la garniture, et les parties d'extrémité des demi-coques étant aptes à enchâsser entre elles au moins le profil de connexion de l'extrémité exposée de la barre conductrice.

L'invention sera mieux comprise à la lecture de la description qui va suivre, donnée uniquement à titre d'exemple et faite en se référant aux dessins, sur lesquels :
- la figure 1 est une vue en perspective d'un passe-barre selon l'invention, dont l'une des deux demi-coques a été retirée ;
- la figure 2 est une vue en élévation du passe-barre de la figure 1 ;
- les figures 3 et 4 sont des vues, respectivement de côté et de dessus, du passe-barre des figures 1 et 2 ;
- la figure 5 est une vue identique à celle de la figure 1 d'une variante de réalisation d'un passe-barre selon l'invention ;
- la figure 6 est une vue en élévation d'un autre mode de réalisation d'un passe-barre selon l'invention dont une demi-coque a été démontée ;
- la figure 7 est une vue en perspective du passe-barre de la figure 6 équipé de ses deux demi-coques ; et
- la figure 8 est une vue en perspective éclatée d'une variante de réalisation de l'invention, dans laquelle chaque demi-coque est en deux parties.

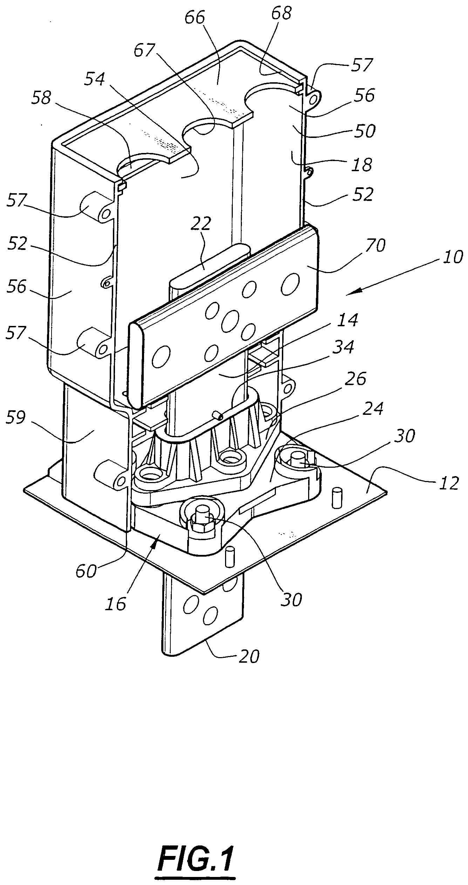

Le passe barre 10 illustré sur la figure 1 est disposé sur une paroi 12 supposée délimiter une enceinte dans laquelle est protégé un équipement électrique de puissance tel qu'un transformateur.

Le passe-barre 10 permet le passage d'un unique conducteur au travers de la paroi 12. Ainsi, pour le franchissement de la paroi 12 par une ligne de courant triphasé, quatre passe-barres identiques sont agencés côte à côte suivant la paroi 12.

Le passe-barre 10 comporte essentiellement une barre-conductrice 14, une garniture 16 de support de la barre au travers de la paroi 12 et un boîtier 18 de protection d'une extrémité de la barre conductrice 10.

La barre 14 présente une extrémité interne 20 et une extrémité externe 22 exposée qui est protégée en étant recouverte par le boîtier 18.

Plus précisément, et comme connu en soi, la garniture 16 comporte un corps 24 et un couvercle 26.

Le corps 24 et le couvercle 26 ont des formes sensiblement axisymétriques par rapport à la direction longitudinale de la barre 14. Ils sont réalisés essentiellement en une matière thermoplastique, par exemple du polyamide, du polybutylène téréphtalate ou du polyamide transparent pour visualiser l'intérieur.

La barre conductrice 14 est rectiligne et a une section oblongue, par exemple rectangulaire avec ses petits côtés arrondis. Elle est réalisée en métal non ferreux et comporte à chaque extrémité des perçages pour la connexion de câbles électriques.

Le corps 24 est traversé de part en part par un conduit de réception de la barre conductrice 14.

Le couvercle 26 présente une forme de cloche et délimite intérieurement un logement de réception de l'essentiel du corps 24. Le logement se prolonge à l'extrémité supérieure du couvercle 26 par une lumière de passage de la barre conductrice 14. Cette lumière a une section sensiblement égale à la section de la barre 14.

Des joints d'étanchéité sont disposés entre le corps 24, le couvercle 26, la barre 14 et la paroi 12.

Le corps 24 de la garniture comporte des perçages pour des boulons 30 de retenue sur la paroi.

Le boîtier 18 comporte deux demi-coquilles 50 identiques dont une seule est visible sur les figures 1 à 4. Ces deux demi-coques présentent chacune, en section transversale par rapport à la direction de la barre conductrice 14, un contour ouvert. En l'espèce, chaque demi-coque présente une section générale en forme de U.

Elles présentent ainsi chacune deux bords longitudinaux 52 suivant lesquels les deux demi-coques sont assemblées en enchâssant entre elles l'extrémité exposée 22 de la barre conductrice.

Dans le mode de réalisation envisagé, chaque demi-coque comporte une paroi principale 54 bordée par deux parois latérales 56 s'étendant généralement parallèlement l'une à l'autre et définissant chacune un bord longitudinal d'accouplement 52.

Les parois latérales présentent des passants 57 de réception de vis ou de boulons de fixation engagés entre les passants alignés des deux demi-coques, lorsque celles-ci sont accouplées. Ainsi, les passants 57 et les boulons constituent des moyens de liaison des deux demi-coques.

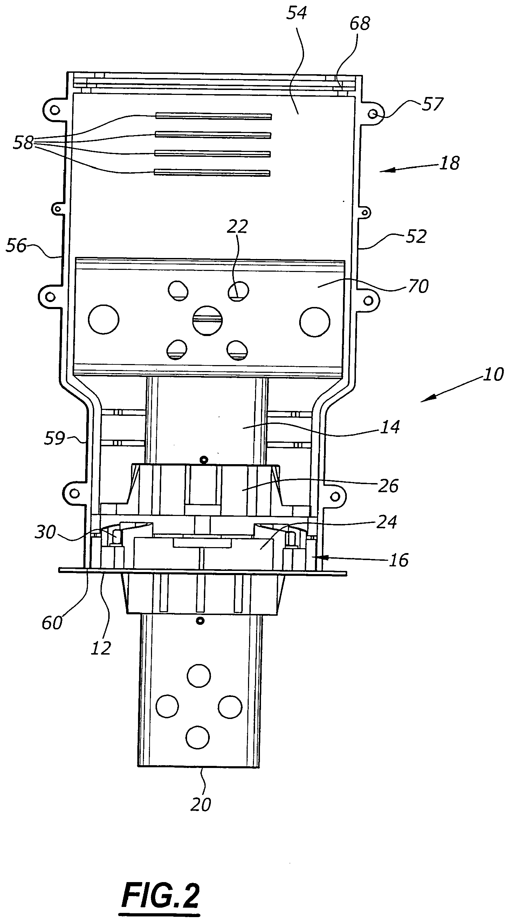

Des ouies d'aération 58, visibles sur la figure 2, sont ménagées au travers de la paroi principale 54.

Les deux demi-coques assemblées délimitent entre elles un corps 59 généralement tubulaire délimitant à une extrémité un contour fermé formant une bouche 60 propre à venir en appui sur la paroi 12.

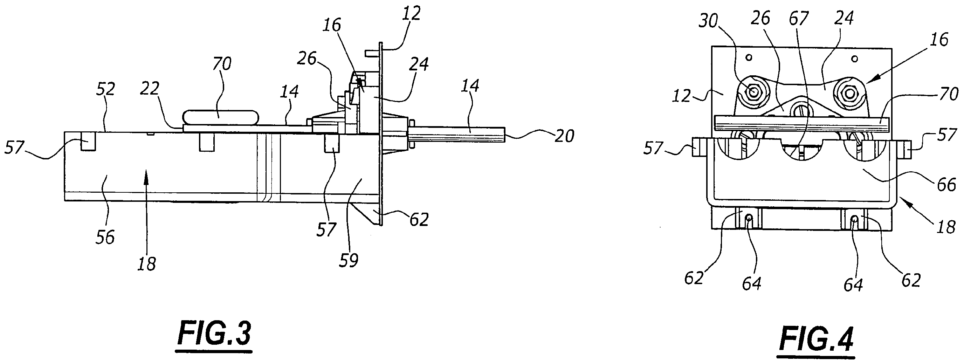

Chaque demi-coque comporte, sur sa surface extérieure, au niveau de la bouche 60, des moyens de liaison mécanique à la paroi 12. Dans le mode de réalisation représenté et comme visible sur les figures 3 et 4, ces moyens de liaison sont formés par des pattes 62 faisant saillie à l'extérieur du boîtier et comportant des encoches 64 de réception de boulons de fixation engagés au travers de la paroi 12 et des pattes 62. Les pattes 62 sont venues de moulage avec les demi-coques 50.

A son autre extrémité, le corps généralement tubulaire est obturé par un fond 66 délimitant un ou plusieurs orifices 67 de passage de câbles conducteurs non représentés.

Avantageusement, le fond 66 est rapporté sur au moins l'une des demi-coques. Dans l'exemple représenté, le fond 66 est formé de deux demi-plaques présentant chacune trois encoches propres à être disposées en regard les unes des autres pour définir les trois orifices 67 de passage des câbles de sortie. Chaque demi-plaque est engagée dans des rainures de maintien 68 délimitées dans une demi-coque sur la surface interne de celle-ci.

Dans l'exemple considéré aux figures 1 à 4, l'extrémité exposée 22 de la barre est équipée d'une traverse 70 présentant trois perçages permettant la connexion de cosses équipant les extrémités de trois câbles traversant le fond 66.

Pour accueillir la traverse 70, le boîtier 18 est évasé au voisinage de cette traverse.

Le boîtier 18 ainsi formé des deux demi-coques 50 et du fond 66 présente une forme générale de cloche ouverte à une extrémité par la bouche 60. Avantageusement, un transformateur d'intensité non représentée est disposé à l'intérieur du boîtier. Celui-ci est connecté à la barre 16 et présente une sortie au travers du boîtier 18 permettant le recueil d'une valeur caractéristique de l'intensité circulant dans la barre.

Les parois formant le boîtier 18 sont avantageusement constituées d'une structure en polymère rigide tel que du polyamide, polybutylène téréphtalate, polyamide transparent et d'un revêtement externe souple, par exemple en un élastomère tel que du silicone ou en une peinture tenant aux UV, notamment une laque acrylique recouvrant la structure en polymère rigide.

On conçoit que le boîtier 18 étant formé de deux demi-coques accouplées et disposées de part et d'autre de la longueur de la barre 16, celles-ci peuvent être mises en place alors que le câble conducteur est déjà lié à la barre conductrice 14. Le boîtier 18 n'a pas de contact, directement ou indirectement, avec la garniture 16, de telle sorte que la longueur de protection offerte par la garniture n'est pas affectée.

Par ailleurs, les deux demi-coques étant identiques, celles-ci peuvent être réalisées à partir d'un même moule permettant ainsi de réduire le coût de fabrication.

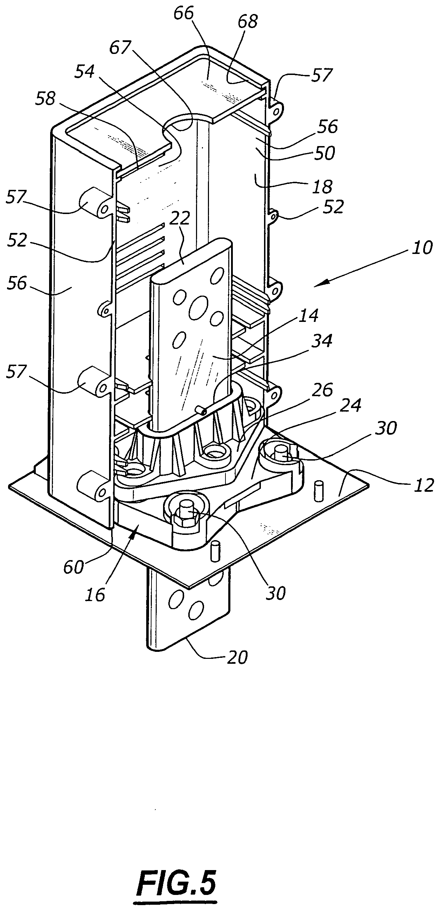

Dans le mode de réalisation des figures 5 à 7, les éléments identiques ou analogues à ceux du premier mode de réalisation sont désignés par les mêmes numéros de référence.

Dans le mode de réalisation de la figure 5, le boîtier comporte, au travers du fond, une unique sortie axiale pour un unique câble connecté à la barre conductrice 14. Dans ce cas, le boîtier est dépourvu d'évasement, de sorte que les parois latérales 56 sont généralement planes.

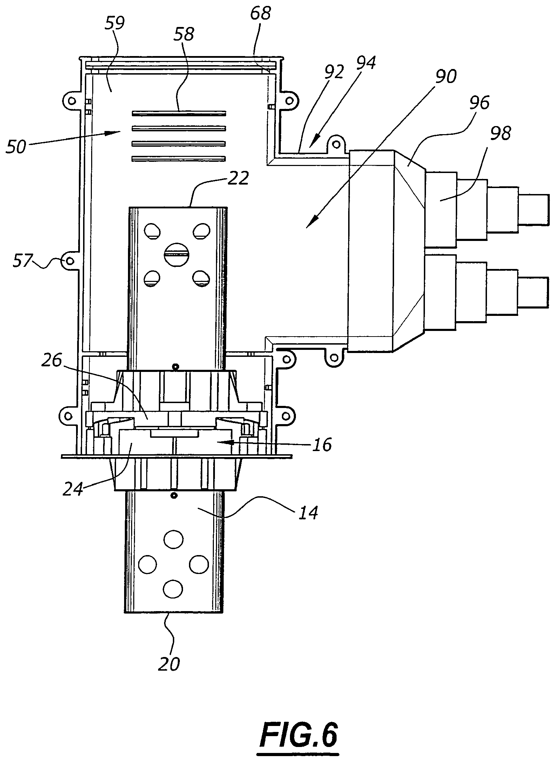

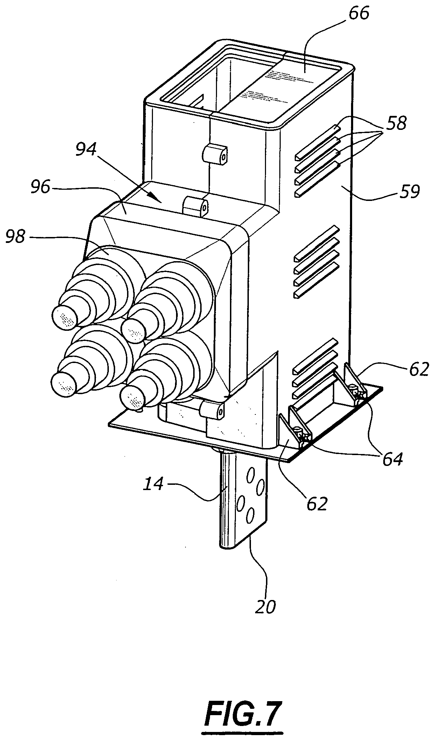

Dans le mode de réalisation des figures 6 et 7, le passe-barre présente une sortie de passage du câble électrique qui est disposée transversalement par rapport à la direction de la barre 14. Ainsi, plus précisément, l'une des parois latérales 56 de chaque demi-coque présente un dégagement 90 prolongé vers l'extérieur par un canal 92 de section en U, les deux canaux 92 assemblés formant un conduit 94 de section rectangulaire visible sur la figure 7. Ce conduit est obturé par un bouchon 96 délimitant de un à quatre passages 98 pour des câbles conducteurs, ces passages étant ménagés en fonction des besoins. Le bouchon 96 est rapporté et est emboîté à l'extrémité ouverte du conduit 94. Dans ce mode de réalisation, le fond 66 du boîtier, engagé à l'extrémité ouverte du corps 50 est plein et obture ainsi complètement le boîtier. Le bouchon 96 est un capuchon souple ou semi-rigide, réalisé par exemple en un matériau élastomère ou en EPDM (éthylène propylène diène monomère). En variante, il est fixé sur les demi-coques par un collier qui serre le bord libre du capuchon sur la surface extérieure du conduit 94.

Ainsi, on conçoit qu'en fonction de la position nécessaire de sortie des câbles, ou du nombre de câbles devant être connectés au passe-barre, le boîtier est conformé de manière adaptée, tout en permettant toujours d'être mis en place alors que les câbles sont reliés à la barre conductrice.

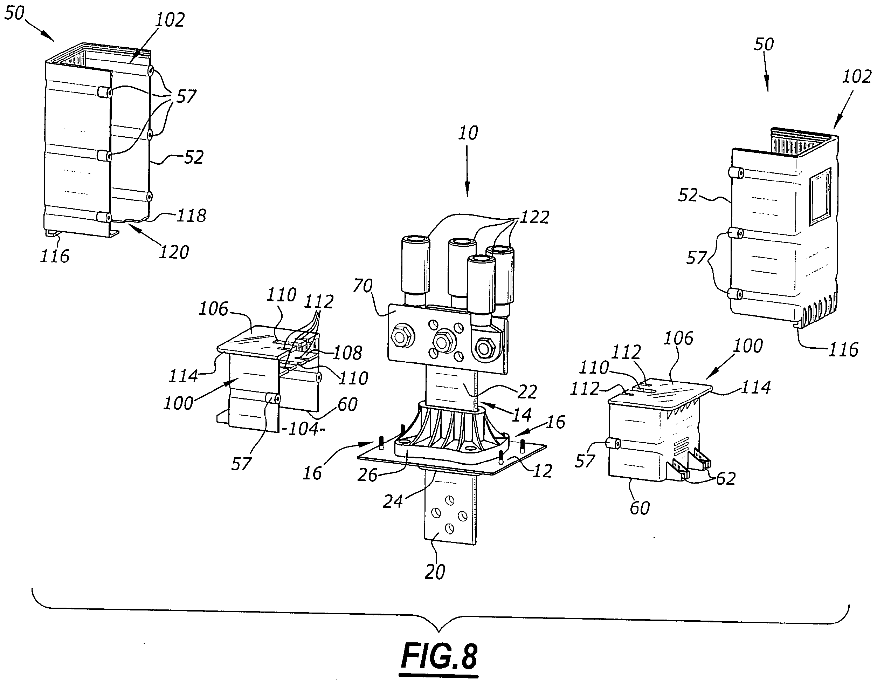

Dans une variante de réalisation représentée sur la figure 8, chacune des demi-coques 50 est divisée en une partie 100 de liaison à la paroi 12 et une partie d'extrémité 102. Ces deux parties sont indépendantes l'une de l'autre et sont susceptibles d'être assemblées l'une à l'autre par des moyens d'assemblage 104 prévus à cet effet sur chacune des demi-coques 50.

Les parties de liaison 100 et d'extrémité 102 présentent chacune une section en U dans un plan perpendiculaire à la direction longitudinale de la barre conductrice 14. La partie de liaison 100 présente une section réduite par rapport à la partie 102.

La face transversale inférieure 104 de la partie 100 tournée vers la plaque 12 est évidée et définit la bouche 60. La face transversale supérieure 106 de la partie 100, parallèle et opposée à la face inférieure 104, tournée vers la partie d'extrémité 102, est pleine. La partie 100 comprend également une cloison transversale interne 108, parallèle à la face supérieure 106, s'étendant sur toute la section transversale en U de la partie 100.

La face supérieure 106 et la cloison interne 108 présentent chacune une échancrure de guidage oblongue 110, apte à s'adapter autour de la barre 14 quand les deux demi-coques 50 sont assemblées. Les échancrures 110 présentent la même forme et son superposées longitudinalement. Elles sont toutes deux ouvertes vers la demi-coquille 50 opposée, de manière à pouvoir recevoir la barre 14.

De part et d'autre des échancrures 110, des ouvertures d'aération 112 sont ménagées dans la face supérieure 106 et dans la cloison interne 108.

La partie 100 porte par ailleurs les pattes 62 de liaison à la paroi 12. Elle porte également des passants 57 permettant d'assembler les parties 100 des deux demi-coques 50 l'une à l'autre en enchâssant entre elles la garniture 16.

La partie 100 comporte autour de la face supérieure 106 une collerette 114 en saillie vers l'extérieur de la section en U, s'étendant sur toute la longueur de cette section.

La partie d'extrémité 102 est disposée longitudinalement dans le prolongement de la partie 100. Elle porte elle aussi les passants 57 permettant l'assemblage des parties d'extrémité 102 des deux demi-coques 50 l'une à l'autre.

Elle comporte à son extrémité longitudinale tournée vers la partie de liaison 100 un ou plusieurs crochets 116 en saillie longitudinalement vers la partie 100. La collerette 114 et les crochets 116 forment les moyens 104 d'assemblage des parties 100 et 102 l'une à l'autre.

La largeur de la collerette 114 est telle que son bord périphérique extérieur présente exactement la même section transversale que la partie d'extrémité 102. La collerette 114 est apte à s'engager dans les crochets 116 par déformation élastique des crochets et/ou de la collerette, de telle sorte que ces crochets maintiennent la collerette 114 plaquée contre l'extrémité de la partie 102.

La face inférieure 118 de la partie 102 tournée vers la partie de liaison 100 est partiellement pleine. Elle porte un évidement 120 de forme adaptée pour venir en coïncidence avec l'échancrure de guidage 110 et les ouvertures d'aération 112 de la face supérieure de la partie 100 quand les parties 100 et 102 sont assemblées l'une à l'autre.

Les parties 100 enchâssent entre elles la garniture 16. Les parties 102 enchâssent entre elles l'extrémité de la barre 14 portant les connexions avec les câbles électriques partant de la barre. Ainsi, les parties 102 enchâssent entre elles la traverse 70 et les cosses 122 de connexion des câbles sur la traverse, comme le montre la figure 8.

Lors du montage du boîtier 18 autour de la barre 14, les parties 100, situées plus près de la plaque 12 que les parties 102, sont engagées les premières. Elles sont guidées dans leur mise en place par les échancrures 110 de la face supérieure 106 et de la cloison 108 venant s'engager autour de la barre 14.

Les parties 102 sont engagées après les parties 100. Du fait qu'elles sont disposées plus loin de la plaque 12, il est plus facile de les disposer autour de la barre 14 et des connexions, de telle sorte qu'il n'est pas prévu de guidage pour les parties 102.

Par ailleurs, des reliefs complémentaires (non représentés) de blocage des parties 100 et 102 l'une par rapport à l'autre sont formés sur les zones pleines des faces 106 et 120 appliquées l'une contre l'autre. Les reliefs formés sur la face 106 font saillies vers la face 120 et réciproquement. Une fois les parties 100 et 102 d'une même demi-coque 50 assemblées l'une à l'autre, ces reliefs sont en prise et limitent les mouvements des parties 100 et 102 l'une par rapport à l'autre dans un plan perpendiculaire à la direction longitudinale.

Les échancrures de guidage 110, dans le cas où la barre 14 présente une section transversale rectangulaire, sont allongées parallèlement au grand côté de la section de la barre. La longueur des échancrures 110 parallèlement à ce grand côté est supérieure de 20 mm environ à la longueur de la section de la barre. Il est ainsi possible d'ajuster la position du boîtier 18 suivant la direction du grand côté par rapport à la barre 14, par exemple pour s'adapter à la forme de la traverse 70 et à la forme des connexions électriques.

Dans les modes de réalisation des figures 5 à 8, le boîtier 18 n'a aucun contact avec la garniture de protection 16, directement ou indirectement.

## Revendications

1. Passe-barre (10) comportant :
- une barre conductrice (14) équipée, à chaque extrémité (20, 22), d'un profil de connexion ;
- une garniture (16) de maintien de la barre conductrice (14) au travers d'une paroi (12), la garniture (16) comportant des moyens (30) de liaison à la paroi (12) ; et
- une enveloppe (18) de protection d'une extrémité exposée (20) de la barre conductrice (14) faisant saillie d'un côté de la garniture (16), ladite enveloppe comportant un boîtier (18) comprenant deux demi-coques (50) propres à enchâsser entre elles ladite extrémité exposée (22) de la barre conductrice (14), chaque demi-coque (50) présentant, en section transversale par rapport à la direction de la barre conductrice (14), un contour ouvert ; et
- des moyens (57) de solidarisation des deux demi-coques (50) entre elles de part et d'autre de ladite extrémité exposée (22) de la barre conductrice (14), ledit boîtier (18) présentant une forme générale de cloche délimitant une bouche (60) de passage au moins de ladite extrémité exposée (22) de la barre conductrice (14), **caractérisé en ce que** ladite bouche (60) définit une surface périphérique d'appui sur la paroi (12), et ledit boîtier (18) n'a pas de contact, directement ou indirectement, avec la garniture (16).

2. Passe-barre selon la revendication 1, **caractérisé en ce qu'**il comporte des moyens (62) de liaison mécanique du boîtier (18) à la paroi (12).

3. Passe-barre selon la revendication 2, **caractérisé en ce que** les moyens de liaison mécanique du boîtier à la paroi comportent des pattes latérales (62) de liaison faisant saillie à l'extérieur du boîtier (18) et propres à recevoir des vis de liaison à la paroi (12).

4. Passe-barre selon l'une quelconque des revendications précédentes, **caractérisé en ce que** les deux demi-coques (50) délimitent ensemble un corps (59) du boîtier (18), généralement tubulaire, et le boîtier (18) comporte un fond (66) délimitant au moins un orifice (67) de passage d'un câble électrique, lequel fond (66) est rapporté sur au moins une demi-coque (50) pour obturer à une extrémité le corps (59) du boîtier (18).

5. Passe-barre selon l'une quelconque des revendications précédentes, **caractérisé en ce que** ledit boîtier (18) délimite au moins une sortie (98) de passage d'un câble électrique disposée transversalement par rapport à la direction exposée de la barre conductrice (14).

6. Passe-barre selon l'une quelconque des revendications précédentes, **caractérisé en ce que** les deux demi-coques (50) du boîtier sont identiques.

7. Passe-barre selon l'une quelconque des revendications précédentes, **caractérisé en ce que** le boîtier (18) comporte une structure en polymère rigide et un revêtement externe souple.

8. Passe-barre selon l'une quelconque des revendications précédentes, **caractérisé en ce qu'**il comporte un transformateur d'intensité disposé dans le boîtier (18) et relié à la barre conductrice (14), lequel transformateur d'intensité présente une sortie hors du boîtier propre à fournir une valeur caractéristique de l'intensité circulant dans la barre conductrice (14).

9. Passe-barre selon l'une quelconque des revendications précédentes, **caractérisé en ce que** chaque demi-coque (50) comprend une partie de liaison (100) et une partie d'extrémité (102) indépendantes l'une de l'autre, et des moyens (104) pour assembler lesdites parties (100, 102) l'une à l'autre, les parties de liaison (100) des demi-coques (50) étant aptes à enchâsser entre elles la garniture (16), et les parties d'extrémité (102) des demi-coques (50) étant aptes à enchâsser entre elles au moins le profil de connexion de l'extrémité exposée (22) de la barre conductrice (14).

## Patentansprüche

1. Schienendurchführung (10), Folgendes umfassend:
- eine Stromschiene (14), die an jedem Ende (20, 22) mit einem Anschlussprofil ausgestattet ist;
- eine Armatur (16) zum Haltern der Stromschiene (14) durch eine Wand (12) hindurch, wobei die Armatur (16) Einrichtungen (30) zur Verbindung mit der Wand (12) umfasst; und
- eine Umhüllung (18) zum Schutz eines freiliegenden Endes (20) der Stromschiene (14), das auf einer Seite der Armatur (16) vorsteht,
wobei die Umhüllung ein Gehäuse (18) mit zwei Halbschalen (50) hat, die sich dazu eignen, das freiliegende Ende (22) der Stromschiene (14) zwischen sich einzuschließen, wobei jede Halbschale (50) im Querschnitt in Bezug auf die Richtung der Stromschiene (14) eine offene Kontur aufweist; und
- Einrichtungen (57) zum Befestigen der zwei Halbschalen (50) aneinander beidseits des freiliegenden Endes (22) der Stromschiene (14),
wobei das Gehäuse (18) eine allgemeine Glockenform aufweist, die eine Mündung (60) zum Durchgang zumindest des freiliegenden Endes (22) der Stromschiene (14) abgrenzt,
**dadurch gekennzeichnet, dass** die Mündung (60) eine Umfangsfläche zur Auflage auf der Wand (12) vorgibt, und das Gehäuse (18) weder direkt noch indirekt einen Kontakt mit der Armatur (16) hat.

2. Schienendurchführung nach Anspruch 1, **dadurch gekennzeichnet, dass** sie Einrichtungen (62) zum mechanischen Verbinden des Gehäuses (18) mit der Wand (12) hat.

3. Schienendurchführung nach Anspruch 2, **dadurch gekennzeichnet, dass** die Einrichtungen zum mechanischen Verbinden des Gehäuses mit der Wand seitliche Verbindungslaschen (62) umfassen, die außen am Gehäuse (18) vorstehen und sich dazu eignen, Schrauben zur Verbindung mit der Wand (12) aufzunehmen.

4. Schienendurchführung nach einem der vorhergehenden Ansprüche, **dadurch gekennzeichnet, dass** die zwei Halbschalen (50) zusammen einen allgemein rohrförmigen Körper (59) des Gehäuses (18) abgrenzen und das Gehäuse (18) einen Boden (66) hat, der zumindest eine Öffnung (67) zum Durchgang eines Elektrokabels abgrenzt, wobei der Boden (66) an mindestens einer Halbschale (50) angebracht ist, um an einem Ende den Körper (59) des Gehäuses (18) zu verschließen.

5. Schienendurchführung nach einem der vorhergehenden Ansprüche, **dadurch gekennzeichnet, dass** das Gehäuse (18) mindestens einen Ausgang (98) zum Durchgang eines Elektrokabels abgrenzt, der quer in Bezug auf die freiliegende Richtung der Stromschiene (14) angeordnet ist.

6. Schienendurchführung nach einem der vorhergehenden Ansprüche, **dadurch gekennzeichnet, dass** die zwei Halbschalen (50) des Gehäuses identisch sind.

7. Schienendurchführung nach einem der vorhergehenden Ansprüche, **dadurch gekennzeichnet, dass** das Gehäuse (18) eine starre Struktur aus Polymer und eine flexible Außenbeschichtung hat.

8. Schienendurchführung nach einem der vorhergehenden Ansprüche, **dadurch gekennzeichnet, dass** sie einen Stromwandler umfasst, der in dem Gehäuse (18) angeordnet und mit der Stromschiene (14) verbunden ist, wobei der Stromwandler einen Ausgang aus dem Gehäuse aufweist, der sich dazu eignet, einen Kennwert der in der Stromschiene (14) zirkulierenden Stromstärke zu liefern.

9. Schienendurchführung nach einem der vorhergehenden Ansprüche, **dadurch gekennzeichnet, dass** jede Halbschale (50) ein Verbindungsteil (100) und ein Endteil (102), die voneinander unabhängig sind, und Einrichtungen (104) hat, um die Teile (100, 102) aneinanderzufügen, wobei die Verbindungsteile (100) der Halbschalen (50) dazu geeignet sind, die Armatur (16) zwischen sich einzuschließen, und die Endteile (102) der Halbschalen (50) dazu geeignet sind, zumindest das Anschlussprofil des freiliegenden Endes (22) der Stromschiene (14) zwischen sich einzuschließen.

## Claims

1. A bushing (10) comprising:
- a conducting bar (14) provided with a connection profile at each end (20, 22);
- a fitting (16) for retaining said conducting bar (14) through a wall (12), said fitting (16) comprising means (30) for connecting to said wall (12); and
- a cover (18) for protecting an exposed end (20) of said conducting bar (14) that projects on one side of said fitting (16),
said cover comprising a case (18) that comprises two half-shells (50) designed to together encapsulate said exposed end (22) of said conducting bar (14), each half-shell (50) having an open outline in a transverse section relative to the direction of said conducting bar (14); and
- means (57) for rigidly connecting together said two half-shells (50) on either side of said exposed end (22) of said conducting bar (14),
said case (18) having a general bell shape delimiting an opening (60) for the passage of at least said exposed end (22) of said conducting bar (14), **characterised in that** said opening (60) defines a peripheral bearing surface on said wall (12), and said case (18) does not have direct or indirect contact with said fitting (16).

2. A bushing according to claim 1, **characterised in that** it comprises means (62) for mechanically connecting said case (18) to said wall (12).

3. A bushing according to claim 2, **characterised in that** said means for mechanically connecting said case to said wall comprise lateral connecting tabs (62) projecting outside of said case (18) and being designed to receive screws for connecting to said wall (12).

4. A bushing according to any one of the preceding claims, **characterised in that** said two half-shells (50) together delimit a generally tubular body (59) of said case (18) and said case (18) comprises a base (66) delimiting at least one through-hole (67) for an electric cable, which base (66) is attached to at least one half-shell (50) in order to plug said body (59) of said case (18) at one end.

5. A bushing according to any one of the preceding claims, **characterised in that** said case (18) delimits at least one output (98) for the passage of an electric cable disposed transversely relative to the exposed direction of said conducting bar (14).

6. A bushing according to any one of the preceding claims, **characterised in that** said two half-shells (50) of said case are identical.

7. A bushing according to any one of the preceding claims, **characterised in that** said case (18) comprises a rigid polymer structure and a flexible outer coating.

8. A bushing according to any one of the preceding claims, **characterised in that** it comprises an intensity transformer disposed in said case (18) and connected to said conducting bar (14), said intensity transformer having an output outside of said case that is designed to provide a value that is characteristic of the intensity circulating in said conducting bar (14).

9. A bushing according to any one of the preceding claims, **characterised in that** each half-shell (50) comprises a connection part (100) and an end part (102) that are independent of each other, and means (104) for assembling said parts (100, 102) to each other, said connection parts (100) of said half-shells (50) being designed to together encapsulate said fitting (16), and said end parts (102) of said half-shells (50) being designed to together encapsulate at least said connection profile of said exposed end (22) of said conducting bar (14).
